# EUROPÄISCHE PATENTANMELDUNG

(11) **EP 4 360 964 A1**
(43) Veröffentlichungstag der Anmeldung: **01.05.2024**
(21) Anmeldenummer: 23189368.6
(22) Anmeldetag: 03.08.2023
(51) Int. Cl.: B60S 1/08

(54) **SCHEIBENWISCHERSYSTEM UND BETRIEBSVERFAHREN DAFÜR**

(30) Priorität: 26.10.2022 DE 102022211331
(71) Anmelder: Stellantis Auto SAS, 78300 Poissy (FR)
(72) Erfinder: CLAUDE, Emmanuel, 78300 Poissy (FR); D ANGELO, Laurent, 78300 Poissy (FR); NIKSCH, Thomas, 65428 Rüsselsheim am Main (DE)
(74) Vertreter: Spitzfaden, Ralf

(57) **Zusammenfassung**

Ein Scheibenwischersystem für ein Fahrzeug umfasst ein Wischerblatt (4), einen Motor (10) zum Antreiben einer Wischbewegung des Wischerblatts (4) über eine Scheibe (2, 3) des Fahrzeugs, der mit mehreren diskreten Leistungsstufen betreibbar ist, und eine Steuereinheit (9), die eingerichtet ist, eine für die Reibung zwischen dem Wischerblatt (4) und der Scheibe (2, 3) repräsentative Messgröße zu erfassen und
die Messgröße mit einem oberen Schwellwert (Thr2, Thr5) zu vergleichen und von einer aktuellen zu einer niedrigeren Leistungsstufe zu wechseln, wenn die Messgröße den oberen Schwellwert (Thr2, Thr5) überschreitet, oder
die Messgröße mit einem unteren Schwellwert (Thr3, Thr4) zu vergleichen und von einer aktuellen zu einer höheren Leistungsstufe zu wechseln, wenn die Messgröße den unteren Schwellwert (Thr3, Thr4) unterschreitet.

## Beschreibung

Die vorliegende Erfindung betrifft ein Verfahren zum Steuern des Betriebs eines Scheibenwischersystems, ein zur Ausführung des Verfahrens geeignetes Scheibenwischersystem sowie ein zur Ausführung des Verfahrens befähigendes Computerprogramm.

Die Reibung zwischen einem Wischerblatt eines Scheibenwischers und der von ihm gewischten Scheibe ist abhängig von der Regenmenge auf der Scheibe. US 6 144 906 A1 schlägt vor, diesen Zusammenhang auszunutzen, um eine Wartezeit zwischen Hüben des Scheibenwischers so zu variieren, dass dessen Antriebsmoment minimal wird, d.h. zwischen Hüben des Scheibenwischers jeweils so lange zu warten, bis sich wieder genug Wasser auf der Scheibe befindet, um eine Bewegung des Wischerblatts mit minimaler Reibung zu ermöglichen. Die daraus resultierende Wischfrequenz muss jedoch keinesfalls mit derjenigen übereinstimmen, die ein Benutzer als für eine befriedigende Sicht durch die Scheibe als nötig erachtet. Außerdem ermöglicht diese bekannte Art der Steuerung nur eine nachträgliche Anpassung der Wischfrequenz an sich verändernde Bedingungen, was insbesondere dann für den Benutzer höchst irritierend sein kann, wenn sein Fahrzeug beim Überholen oder Überholtwerden der Gischtfahne eines benachbarten Fahrzeugs ausgesetzt ist. Die Notwendigkeit, den Betrieb des Scheibenwischers solchen Gegebenheiten schnell oder sogar vorausschauend anpassen zu können, dürfte der Grund dafür sein, dass die adaptive Wischersteuerung nach US 6 144 906 A1 sich gegenüber einfacheren Lösungen, bei denen das Scheibenwischersystem mehrere diskrete Leistungsstufen unterstützt und der Benutzer eine von diesen auswählt, nicht hat durchsetzen können.

Wenn ein solches herkömmliches Scheibenwischersystem mit einer an die Niederschlagsverhältnisse nicht angepassten, hohen Leistung betrieben wird, kann dies zu einem Heißlaufen des Motors und auf Dauer zu dessen Beschädigung führen. Dies führt insbesondere bei Fahrzeugen, die im Car Sharing eingesetzt werden, zu Problemen, da deren Benutzer, da sie die Folgekosten von unsachgemäßer Behandlung nicht tragen müssen, dazu neigen, die Fahrzeuge nachlässig zu behandeln. Zwar wäre es natürlich möglich, Motorschäden zu vermeiden, indem ein leistungsstärkerer Motor verwendet wird, doch müssten die damit verbundenen Kosten letztlich auch von denjenigen Fahrzeugkäufern getragen werden, die den Scheibenwischer sachgemäß verwenden, was offensichtlich nicht wünschenswert ist.

Eine Aufgabe der vorliegenden Erfindung ist, ein Scheibenwischersystem bzw. ein Betriebsverfahren dafür zu schaffen, die bei vernachlässigbaren Mehrkosten Toleranz gegen unsachgemäße Behandlung erreichen.

Die Aufgabe wird einem Aspekt der Erfindung zufolge gelöst durch ein Verfahren zum Steuern des Betriebs eines zwischen diskreten Leistungsstufen umschaltbaren Scheibenwischersystems mit den Schritten
a) Erfassen einer für die bei einer aktuellen Leistungsstufe auftretende Reibung zwischen einem Wischerblatt des Scheibenwischersystems und einer Scheibe repräsentativen Messgröße und Vergleichen der Messgröße mit einem oberen Schwellwert;
b) Wechseln zu einer niedrigeren Leistungsstufe, wenn die Messgröße den oberen Schwellwert überschreitet.

Die aktuelle Leistungsstufe kann durch eine Benutzereingabe festgelegt sein. So ist sichergestellt, dass das Scheibenwischer mit der Benutzer festgelegten Leistung solange arbeiten kann, wie nicht eine Drosselung der Leistung zum Schutz des Motors erforderlich ist.

Komplementär dazu kann die bei der aktuellen Leistungsstufe erfasste Messgröße auch mit einem unteren Schwellwert verglichen und zu einer höheren Leistungsstufe gewechselt werden, wenn die Messgröße den unteren Schwellwert unterschreitet. Dies ermöglicht insbesondere eine automatische Wiederheraufsetzung der Leistung bei wiedereinsetzendem Niederschlag, wenn diese zuvor automatisch auf eine niedrigere als die vom Benutzer eingestellte Leistungsstufe gedrosselt worden ist. D.h. wenn die Leistung mit dem erfindungsgemäßen Verfahren automatisch erhöht wird, sollte die dabei eingestellte höhere Leistungsstufe gleich einer zuvor durch eine Benutzereingabe spezifizierten Leistungsstufe oder niedriger sein.

Da eine hohe Reibung die für einen Bewegungszyklus des Wischerblatts benötigte Zeit verlängert, kann als repräsentative Messgröße die Dauer eines Bewegungszyklus des Scheibenwischers genutzt werden.

Um eine allzu häufige und für den Benutzer eventuell irritierende Änderung der Leistungsstufe zu vermeiden, kann vorgesehen werden, dass die Zeitdauer mehrerer Bewegungszyklen des Wischerblatts berücksichtigt wird, und etwa eine Überschreitung des oberen Schwellwerts der Reibung dann festgestellt wird, wenn von einer vorgegebenen Zahl n von Bewegungszyklen jeder einzelne länger dauert als durch einen Schwellwert vorgegeben, oder wenn die Gesamtdauer der n Zyklen einen Schwellwert übersteigt. Die Zahl n kann für alle Leistungsstufen dieselbe oder je nach Leistungsstufe unterschiedlich gewählt sein.

Als diskrete Leistungsstufen kommen insbesondere in Betracht:
- eine intermittierende Stufe, in der sich Phasen des Stillstands des Wischerblatts mit Phasen abwechseln, in denen das Wischerblatt bei einer gegebenen Reibung mit einer ersten Geschwindigkeit bewegt wird;
- eine erste Dauerbetriebsstufe, in der das Wischerblatt bei der gegebenen Reibung mit der ersten Geschwindigkeit bewegt wird;
- eine zweite Dauerbetriebsstufe, in der das Wischerblatt bei der gegebenen Reibung mit einer zweiten Geschwindigkeit bewegt wird.

Darüber hinaus sollte auch eine Ausschaltstufe existieren, in der das Wischerblatt nicht bewegt wird. Es ist zwar denkbar, im Rahmen des Wechsels zu einer niedrigeren Leistungsstufe auch in die Ausschaltstufe zu wechseln, allerdings ist dabei zu berücksichtigen, dass in der Ausschaltstufe keine Reibung mehr abgeschätzt werden kann und folglich keine automatische Rückkehr in eine höhere Leistungsstufe möglich ist.

Scheibenwischersysteme, die zwischen mehreren diskreten Leistungsstufen durch einen Benutzer von Hand umschaltbar sind, sind zahlreich bekannt und günstig verfügbar. Um diese erfindungsgemäß nutzen zu können, genügt es, einen Bordcomputer zwischen ein Bedienelement, an dem der Benutzer die gewünschte Leistungsstufe einstellen kann, und den Motor des Scheibenwischers einzufügen, so dass der Bordcomputer anstelle des Bedienelements die Leistungsstufe des Motors festlegen kann. Da ein solcher Bordcomputer bereits in vielen Fällen verwendet wird, um Eingaben von Bedienelementen an jeweils zugeordnete Einrichtungen eines Fahrzeugs weiterzuleiten, genügt zum Ausführen der Erfindung ein Computerprogramm, das, wenn es von einem Bordcomputer eines Fahrzeugs ausgeführt wird, diesen veranlasst, das oben beschriebene Verfahren auszuführen.

Gegenstand der Erfindung ist ferner ein Scheibenwischer für ein Fahrzeug, mit einem Wischerblatt, einem Motor zum Antreiben einer Wischbewegung des Wischerblatts über eine Scheibe des Fahrzeugs, der mit mehreren diskreten Leistungsstufen betreibbar ist, und einer Steuereinheit, die eingerichtet ist, eine für die Reibung zwischen dem Wischerblatt und der Scheibe repräsentative Messgröße zu erfassen und
die Messgröße mit einem oberen Schwellwert zu vergleichen und von einer aktuellen zu einer niedrigeren Leistungsstufe zu wechseln, wenn die Messgröße den oberen Schwellwert überschreitet, oder
die Messgröße mit einem unteren Schwellwert zu vergleichen und von einer aktuellen zu einer höheren Leistungsstufe zu wechseln, wenn die Messgröße den unteren Schwellwert unterschreitet.

Eine der diskreten Leistungsstufen sollte durch einen Benutzer an einem Bedienelement vorgebbar sein. Die Steuereinheit ist dann zweckmäßigerweise eingerichtet, nur dann von einer aktuellen zu einer höheren Leistungsstufe zu wechseln, wenn die höhere Leistungsstufe nicht höher ist als die vom Benutzer an dem Bedienelement vorgegebene Leistungsstufe.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines Kraftfahrzeugs mit einem Scheibenwischersystem gemäß der Erfindung;
- Fig. 2: ein Flussdiagramm eines von einem Bordcomputer des Kraftfahrzeugs ausgeführten Verfahrens zum Steuern des Scheibenwischersystems.

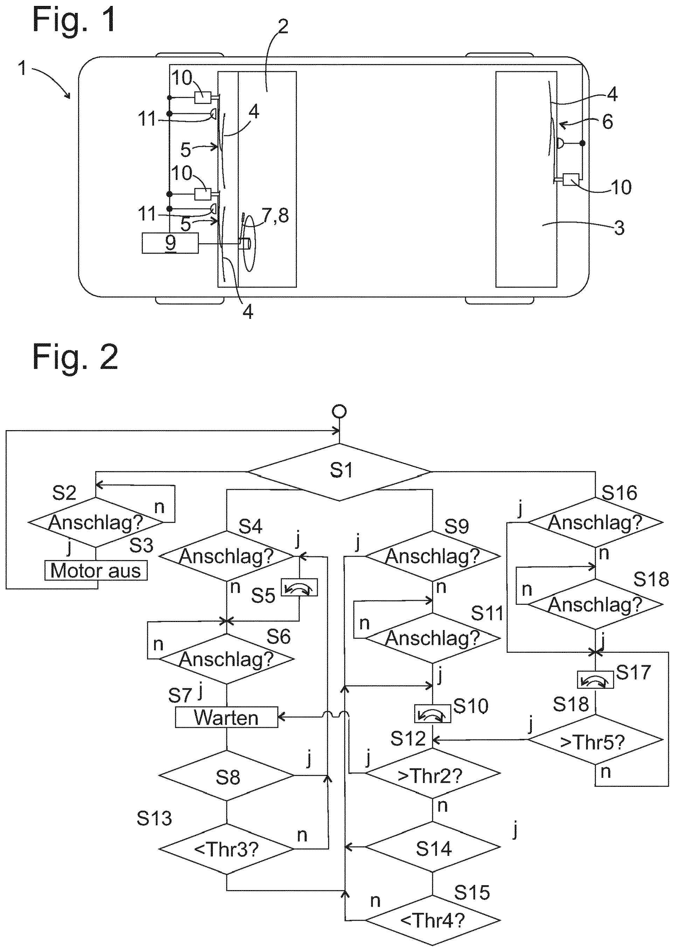

Das in Fig. 1 gezeigte Kraftfahrzeug 1 hat eine Frontscheibe 2 und eine Heckscheibe 3, die in fachüblicher Weise mit zwei bzw. einem jeweils ein Wischblatt 4 tragenden Scheibenwischern 5, 6 bestückt sind. Ein Bedienelement 7 des Scheibenwischersystems ist in ebenfalls üblicher und hier nicht im Detail dargestellter Weise als von einer Lenksäule des Fahrzeugs abstehender Hebel 8 ausgebildet, der durch einen Fahrer des Fahrzeugs zwischen mehreren diskreten Stellungen um die Lenksäule schwenkbar oder um eine eigene Längsachse drehbar ist. Jede dieser Stellungen entspricht einem möglichen Betriebszustand des Scheibenwischersystems und umfasst wenigstens Stellungen für die Betriebszustände Aus, langsamer Intervallbetrieb, langsamer Dauerbetrieb und schneller Dauerbetrieb. Die Dauer einer Pause zwischen zwei Bewegungen der Scheibenwischer 5 im Intervallbetrieb kann mittels eines Drehschalters am Hebel 8 oder eines anderen geeigneten Bedienelements veränderbar sein.

Ein Bordcomputer 9 ist mit dem Hebel 8 über einen Bus verbunden, um dessen Stellung abfragen und Motoren 10 der Scheibenwischer entsprechend der erfassten Stellung ansteuern zu können. Des Weiteren verfügt der Bordcomputer 9 über Mittel, um zu erfassen, ob sich die Scheibenwischer 5, 6 in einer Anschlagstellung befinden oder nicht, z.B. können Schalter 11 vorgesehen sein, die jeweils von den Scheibenwischern 5, 6 betätigt werden, wenn sie eine Anschlagstellung am unteren Rand der Scheibe 2 bzw. 3 erreichen.

Die Leistungsfähigkeit der Motoren 10 ist jeweils ausreichend bemessen, um beliebig lang im schnellen Dauerbetrieb arbeiten zu können, solange die Scheiben 2, 3 nass genug sind, um die Reibung zwischen ihnen und den Wischblättern 4 niedrig zu halten, und um lange Zeit im Intervallbetrieb arbeiten zu können, auch wenn die Scheiben 2, 3 trocken sind.

Ein Arbeitsverfahren des Bordcomputers 9 zum Steuern der Scheibenwischer wird im Folgenden mit Bezug auf Fig. 2 beschrieben. Der Einfachheit halber ist hier angenommen, dass der gesteuerte Scheibenwischer ein Scheibenwischer 5 der Frontscheibe 2 ist; es versteht sich ohne detaillierte Beschreibung, dass der Scheibenwischer der Heckscheibe 3 nach gleichen Prinzipien wie nachfolgend erläutert gesteuert werden kann.

Der Bordcomputer 9 überwacht fortlaufend, ob der der Fahrer den am Hebel 8 eingestellten Betriebszustand verändert hat. Wenn ja, springt er aus jeder Phase des Verfahrens zu Schritt S1. In diesem ermittelt der Bordcomputer 9, welches der neu eingestellte Betriebszustand ist. Wenn der neue Betriebszustand "Aus" ist, schaltet er den Motor 10 aus, sobald der Schalter 11 anzeigt, dass der Wischer die Anschlagstellung erreicht hat (S2, S3). Ist der neue Zustand "langsamer Intervallbetrieb", dann wird geprüft, ob sich der Scheibenwischer 5 am Anschlag befindet (S4), und wenn ja, wird ein aus zwei gegenläufigen Wischbewegungen bestehender Bewegungszyklus des Scheibenwischers 5 gestartet (S5). Anschließend wird abgewartet, bis der laufende oder mit Schritt S5 eingeleitete Bewegungszyklus beendet ist (S6), es wird eine vorgegebene Wartezeit abgewartet (S7), es wird geprüft, ob die Stellung des Bedienelements 7 dem Intervallbetriebsmodus oder einem der Dauerbetriebsmodi entspricht (S8), und da ersteres hier der Fall ist, wird ein neuer Bewegungszyklus (S5) gestartet.

Im einfachsten Fall und wenn der Motor 10 dafür belastbar genug ist, kann der Intervallbetrieb unabhängig vom Zustand der Scheibe 2 über unbestimmte Zeit beibehalten werden. Wenn hingegen bei trockener Scheibe 2 oder unter anderen ungünstigen Bedingungen eine Überhitzung des Motors möglich ist, kann vorgesehen werden, dass die Dauer jedes Bewegungszyklus S5 gemessen wird, und der Motor 10 ausgeschaltet wird, wenn der Bewegungszyklus über ein vorgegebenes Maximum hinaus andauert (d.h. wenn die Gefahr besteht, dass der Wischer 5 blockiert ist und deswegen der Zyklus nicht endet), oder wenn während einer vorgegebenen Zeitspanne von mindestens einigen Minuten die Bewegungszyklen länger gedauert haben als ein erster Schwellwert, der kleiner als das Maximum, aber deutlich größer als eine bei normal nasser Scheibe zu erwartende Zyklusdauer ist.

Wenn der neue Betriebszustand der langsame Dauerbetrieb ist, entsprechen die anfänglichen Verfahrensschrittte S9-S11 den oben für den Intervallbetrieb beschrieben Schritten S4-S6. Die Dauer des Bewegungszyklus S10 wird gemessen und in Schritt S12 mit einem zweiten Schwellwert Thr2 verglichen. Wenn bei einer vorgegebenen kleinen Zahl n von Zyklen, z.B. 3 Zyklen, festgestellt wird, dass der zweite Schwellwert Thr2 überschritten ist, so kann daraus geschlossen werden, dass die Scheibe 2 trocken oder zumindest nicht mehr nass genug ist, um Dauerbetrieb des Wischers zu erfordern. In diesem Fall springt das Verfahren in den Intervallbetrieb zu Schritt S7. Hier wird nun in Schritt S8 festgestellt, dass der aktuelle Betriebsmodus nicht der am Bedienelement 7 eingestellte Intervallbetriebsmodus ist. Daraufhin wird in Schritt S13 die gemessene Zyklusdauer mit einem dritten, niedrigen Schwellwert Thr3 verglichen, und wenn dieser unterschritten ist, so kann daraus gefolgert werden, dass wieder mehr Wasser auf der Scheibe 2 ist und der langsame Dauerbetrieb wieder aufgenommen werden kann. D.h. wenn in Schritt S13 für eine gegebene Zahl von aufeinanderfolgenden Zyklen, z.B. 3, festgestellt wird, dass deren Dauer kleiner als der Schwellwert Thr3 ist, nimmt das Verfahren den langsamen Dauerbetrieb wieder auf (S10), anderenfalls setzt es den Intervallbetrieb mit dem Schritt S5 fort.

Wenn in Schritt S12 festgestellt wird, dass der zweite Schwellwert nicht überschritten ist, folgt in S14 eine Prüfung, analog zu S8, ob die Stellung des Bedienelements 7 dem aktuell laufenden langsamen Dauerbetriebsmodus oder etwa dem schnellen Dauerbetriebsmodus entspricht. Wenn der eingestellte Betriebsmodus der langsame Dauerbetriebsmodus ist, dann findet ein neuer Wischzyklus S10 statt; anderenfalls wird in Schritt S15 geprüft, ob die Dauer des letzten Zyklus oder der n letzten Zyklen unter einem niedrigen Schwellwert Thr4 liegt. Wenn nein, kehrt das Verfahren zu Schritt S10 zurück, wenn ja, dann geht es über zu Schritt S18 (siehe unten) des schnellen Dauerbetriebsmodus.

Wenn der in Schritt S1 erkannte eingestellte Betriebszustand der schnelle Dauerbetriebsmodus ist, führt das Verfahren zunächst Schritte S16-S18 aus, die sich von den Schritten S9-S11 allenfalls dadurch unterscheiden, dass sie bei einer höheren Geschwindigkeit des Motors 10 ausgeführt werden. Wiederum wird in Schritt S17 die Zyklusdauer gemessen, und das Ergebnis wird in Schritt S19 mit einem Schwellwert Thr 5 verglichen, um bei Überschreitung desselben festzustellen, dass die Reibung offenbar zu hoch ist, um den schnellen Dauerbetrieb ohne Gefahr für den Motor aufrechterhalten zu können und daraufhin zu Schritt S12 überzugehen. Ist der Schwellwert Thr5 hingegen unterschritten, so kann sich ein weiterer schneller Wischzyklus S17 anschließen.

### Bezugszeichen

- 1: Kraftfahrzeug
- 2: Frontscheibe
- 3: Heckscheibe
- 4: Wischblatt
- 5: Scheibenwischer
- 6: Scheibenwischer
- 7: Bedienelement
- 8: Hebel
- 9: Bordcomputer
- 10: Motor
- 11: Schalter

## Patentansprüche

1. Verfahren zum Steuern des Betriebs eines zwischen diskreten Leistungsstufen umschaltbaren Scheibenwischersystems mit den Schritten a) Erfassen einer für die bei einer aktuellen Leistungsstufe auftretende Reibung zwischen einem Wischerblatt (4) des Scheibenwischersystems und einer Scheibe (2, 3) repräsentativen Messgröße (S10, S17) und Vergleichen (S12, S18) der Messgröße mit einem oberen Schwellwert (Thr2, Thr5); b) Wechseln zu einer niedrigeren Leistungsstufe, wenn die Messgröße den oberen Schwellwert (Thr2, Thr5) überschreitet.

2. Verfahren zum Steuern des Betriebs eines zwischen diskreten Leistungsstufen umschaltbaren Scheibenwischersystems mit den Schritten a) Erfassen einer für die bei einer aktuellen Leistungsstufe auftretende Reibung zwischen einem Wischerblatt (4) des Scheibenwischersystems und einer Scheibe (2, 3) repräsentativen Messgröße (S10, S17) und Vergleichen (S13, S15) der Messgröße mit einem unteren Schwellwert (Thr3, Thr4); b) Wechseln zu einer höheren Leistungsstufe, wenn die Messgröße den unteren Schwellwert (Thr3, Thr4) unterschreitet.

3. Verfahren nach Anspruch 1 oder 2, mit dem vorbereitenden Schritt des Festlegens der aktuellen Leistungsstufe anhand einer Benutzereingabe.

4. Verfahren nach Anspruch 2, bei dem der Schritt b) nur unter der Bedingung durchgeführt wird, dass die höhere Leistungsstufe gleich einer zuvor durch eine Benutzereingabe spezifizierten Leistungsstufe oder niedriger ist.

5. Verfahren nach einem der vorhergehenden Ansprüche, bei dem die repräsentative Messgröße die Zeitdauer einer oder mehrerer Bewegungszyklen des Wischerblatts ist.

6. Verfahren nach einem der vorhergehenden Ansprüche, bei dem die diskreten Leistungsstufen mehrere Leistungsstufen umfassen, die ausgewählt sind unter
- einer intermittierenden Stufe, in der sich Phasen des Stillstands des Wischerblatts (S5) mit Phasen (S7) abwechseln, in denen das Wischerblatt (4) bei einer gegebenen Reibung mit einer ersten Geschwindigkeit bewegt wird;
- einer ersten Dauerbetriebsstufe, in der das Wischerblatt bei der gegebenen Reibung mit der ersten Geschwindigkeit bewegt wird (S10);
- einer zweiten Dauerbetriebsstufe, in der das Wischerblatt bei der gegebenen Reibung mit einer zweiten Geschwindigkeit bewegt wird (S17).

7. Computerprogramm, das, wenn es von einem Bordcomputer (9) eines Fahrzeugs ausgeführt wird, diesen veranlasst, das Verfahren nach einem der vorhergehenden Ansprüche auszuführen.

8. Scheibenwischersystem für ein Fahrzeug, mit einem Wischerblatt (4), einem Motor (10) zum Antreiben einer Wischbewegung des Wischerblatts (4) über eine Scheibe (2, 3) des Fahrzeugs, der mit mehreren diskreten Leistungsstufen betreibbar ist, und einer Steuereinheit (9), die eingerichtet ist, eine für die Reibung zwischen dem Wischerblatt (4) und der Scheibe (2, 3) repräsentative Messgröße zu erfassen und
die Messgröße mit einem oberen Schwellwert (Thr2, Thr5) zu vergleichen und von einer aktuellen zu einer niedrigeren Leistungsstufe zu wechseln, wenn die Messgröße den oberen Schwellwert (Thr2, Thr5) überschreitet, oder
die Messgröße mit einem unteren Schwellwert (Thr3, Thr4) zu vergleichen und von einer aktuellen zu einer höheren Leistungsstufe zu wechseln, wenn die Messgröße den unteren Schwellwert (Thr3, Thr4) unterschreitet.

9. Scheibenwischersystem nach Anspruch 8, ferner mit einem Bedienelement (7), an dem eine der diskreten Leistungsstufen durch einen Benutzer vorgebbar ist, wobei die Steuereinheit (9) eingerichtet ist, nur dann von einer aktuellen zu einer höheren Leistungsstufe zu wechseln, wenn die höhere Leistungsstufe nicht höher ist als die vom Benutzer vorgegebene Leistungsstufe.

10. Scheibenwischersystem nach Anspruch 8 oder 9, bei dem die diskreten Leistungsstufen mehrere Leistungsstufen umfassen, die ausgewählt sind unter
- einer intermittierenden Stufe, in der sich Phasen des Stillstands des Wischerblatts mit Phasen abwechseln, in denen das Wischerblatt bei einer gegebenen Reibung mit einer ersten Geschwindigkeit bewegt wird;
- einer ersten Dauerbetriebsstufe, in der das Wischerblatt bei der gegebenen Reibung mit der ersten Geschwindigkeit bewegt wird;
- einer zweiten Dauerbetriebsstufe, in der das Wischerblatt bei der gegebenen Reibung mit einer zweiten Geschwindigkeit bewegt wird; und
- einer Ausschaltstufe, in der das Wischerblatt nicht bewegt wird.
